(19) Europäisches Patentamt / European Patent Office / Office européen des brevets

(11) **EP 3 110 014 B1**

(12) **EUROPEAN PATENT SPECIFICATION**

(45) Date of publication and mention
of the grant of the patent:
**08.01.2020 Bulletin 2020/02**

(21) Application number: **14886076.0**

(22) Date of filing: **21.03.2014**

(51) Int Cl.:
**H04B 1/28** *(2006.01)*    **H04B 1/30** *(2006.01)*

(86) International application number:
**PCT/CN2014/073828**

(87) International publication number:
**WO 2015/139293 (24.09.2015 Gazette 2015/38)**

(54) **SIGNAL PROCESSING METHOD, DEVICE AND SYSTEM**

SIGNALVERARBEITUNGSVERFAHREN, -VORRICHTUNG UND -SYSTEM

PROCÉDÉ, DISPOSITIF ET SYSTÈME DE TRAITEMENT DE SIGNAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**28.12.2016 Bulletin 2016/52**

(73) Proprietor: **Huawei Technologies Co., Ltd.
Longgang District
Shenzhen, Guangdong 518129 (CN)**

(72) Inventor: **KONG, Xiangming
Shenzhen
Guangdong 518129 (CN)**

(74) Representative: **Pfenning, Meinig & Partner mbB
Patent- und Rechtsanwälte
Theresienhöhe 11a
80339 München (DE)**

(56) References cited:
**EP-A1- 2 141 819      EP-A1- 2 141 819
WO-A1-2013/152022     CN-A- 101 021 561
CN-A- 101 257 465     CN-A- 102 025 382
CN-A- 103 583 003**

**Description**

**TECHNICAL FIELD**

The present invention relates to the field of communications technologies, and specifically, to a signal processing method, apparatus, and system.

**BACKGROUND**

After receiving a signal, a receive end in a communications system sends the received signal as an input signal to a frequency mixer for frequency mixing with a local-frequency signal whose frequency is the same as a carrier frequency, so as to perform sampling processing after down-converting the input signal into a baseband signal. When the input signal is constituted by multiple narrowband signals with different carrier frequencies, the receive end needs to perform frequency mixing and sampling separately for each narrowband signal. That is, the receive end needs to have multiple parallel receive channels and each channel receives one narrowband signal. In a channel, a frequency of a local-frequency signal is the same as a carrier frequency of a signal received, and a cut-off frequency of a low-pass filter and a sampling frequency of an analog-to-digital converter are also both set according to a bandwidth of the signal received. As a result, complexity of a radio frequency front-end circuit of a receiver increases as a quantity of signals grows.

A modulated wideband converter (Modulated Wideband Converter, MWC) is a sequence demodulation receiver primarily used to receive a multiband signal. It generates a frequency mixed signal by using a periodic random sequence. This random sequence is constituted by multiple discrete resonant frequencies with an equal interval in a frequency domain. A clock speed at which the random sequence is generated determines a highest resonant frequency, that is, a width of a frequency band that the MWC can support. An entire radio frequency bandwidth that the MWC can support may be divided into M subbands. A bandwidth of a subband is $f_p$. A center of each subband corresponds to one resonant frequency of the random sequence. A compressed sensing technology is used. Being different from a conventional receiver, it allows all narrowband signals to be aliased together after frequency mixing, and then separates a sampling point of each signal by using an algorithm.

The inventor of the present invention finds that, in the prior art, when an MWC uses a local-frequency signal generated by a random sequence to perform frequency mixing in a signal processing process, a signal in each subband is moved to a baseband and aliased. When an input signal is constituted by discrete narrowband signals, there exist some subbands that carry no wanted signal. Noise and interference signals included in these subbands are also moved to the baseband and aliased with a wanted signal in a frequency mixing process. As a result, a signal-to-noise ratio of a signal restored later is lower.

EP 2141819A describes a processing device (40) for processing an analog complex input signal generated by down conversion of an aggregated-spectrum radio-frequency signal in a radio-receiver (10), wherein the complex input signal comprises a plurality of sub bands (S1-S4) scattered across a total frequency band (4) of the complex input signal.

WO 2013/152022A discloses a method and apparatus for use in a wireless communication system including compressed sensing for wide spectrum scanning. A single or multiple parallel compressed scanners use compressed sensing for wide spectrum scanning, and the single compressed scanner includes a spectrum shifting and reassembly block, an array or parallel arrangement of mixers, a low pass filter, a sampler, and a spectrum recovery engine.

**SUMMARY**

The present invention is as defined in the appended independent claims. Embodiments of the present invention provide a signal processing method. When a to-be-down-converted signal includes multiple signals in different frequency bands, and one frequency mixing channel is used for frequency mixing, the to-be-down-converted signal is frequency-mixed with only harmonic signals at centers of subbands in which spectral components of the to-be-down-converted signal are located, which can improve a signal-to-noise ratio of an aliased signal after the frequency mixing. The embodiments of the present invention further provide a corresponding apparatus and system.

A first aspect of the present invention provides a signal processing method, including:

determining location information of spectral components of a to-be-down-converted signal in subbands resulting from pre-division, where a bandwidth of the subband resulting from pre-division depends on a cycle of a local-frequency signal used for frequency mixing;

determining, according to the location information of the spectral components in the subbands resulting from pre-division, a spectral support sequence of the local-frequency signal that corresponds to the to-be-down-converted signal, where the spectral support sequence of the local-frequency signal is used to instruct a local-frequency signal generation apparatus to generate harmonic signals of a preset magnitude only at centers of subbands in which the spectral components are located; and
performing frequency mixing for the to-be-down-converted signal and the harmonic signals that correspond to the spectral components, to obtain a down-converted signal.

With reference to the first aspect, in a first possible implementation manner, during the determining location information of spectral components of a to-be-down-converted signal in subbands resulting from pre-division, the method further includes:

determining a type of an aliasing mode and a quantity of aliased signals included in each aliasing mode, where the aliasing mode is used to describe a status of aliased signals included in different frequency band ranges; and
determining a measurement matrix used for describing a frequency mixing and analog-to-digital conversion sampling process, according to a quantity of the subbands resulting from pre-division and the quantity of aliased signals included in each aliasing mode.

With reference to the first possible implementation manner of the first aspect, in a second possible implementation manner, the determining a measurement matrix used for describing a frequency mixing and analog-to-digital conversion sampling process, according to a quantity of the subbands resulting from pre-division and the quantity of aliased signals included in each aliasing mode, includes:

determining a quantity of columns of the measurement matrix according to the quantity of the subbands resulting from pre-division; and
determining a quantity of rows of the measurement matrix, according to a quantity of aliased signals included in an aliasing mode that includes a greatest quantity of aliased signals.

With reference to the first or the second possible implementation manner of the first aspect, in a third possible implementation manner, the method further includes:
determining, according to the quantity of aliased signals included in each aliasing mode and the measurement matrix, a mode measurement matrix that corresponds to each aliasing mode, where the mode measurement matrix is a sub-matrix formed according to a column, of the measurement matrix, that corresponds to location information of a subband in which a spectral component corresponding to a mode aliased signal is located, where the mode aliased signal is an aliased signal included in the aliasing mode.
With reference to the third possible implementation manner of the first aspect, in a fourth possible implementation manner, after the determining a mode measurement matrix that corresponds to each aliasing mode, the method further includes:

determining a non-full-column-rank matrix in the mode measurement matrices according to an initial subband set, where the initial subband set is a set of location information of the subbands in which the spectral components are located; and
adding new subband location information to the initial subband set according to a preset policy, to change the non-full-column-rank matrix to a full-column-rank matrix.

With reference to the fourth possible implementation manner of the first aspect, in a fifth possible implementation manner, the adding new subband location information to the initial subband set according to a preset policy, to change the non-full-column-rank matrix to a full-column-rank matrix, includes:

determining, according to the preset policy, the new subband location information added to the initial subband set; and
re-determining a mode measurement matrix of each aliasing mode according to the new subband location information and the location information of the subbands in which the spectral components are located, to change the non-full-column-rank matrix to the full-column-rank matrix.

With reference to the fifth possible implementation manner of the first aspect, in a sixth possible implementation manner,
the determining, according to the location information of the spectral components in the subbands resulting from pre-division, a spectral support sequence of the local-frequency signal that corresponds to the to-be-down-converted signal, where the spectral support sequence of the local-frequency signal is used to instruct a local-frequency signal generation apparatus to generate harmonic signals of a preset magnitude only at centers of subbands in which the spectral components are located, includes:

determining, according to the location information of the spectral components in the subbands resulting from pre-division and the new subband location information, the spectral support sequence of the local-frequency signal that corresponds to the to-be-down-converted signal, where the spectral support sequence of the local-frequency signal is used to instruct the local-frequency signal generation apparatus to generate harmonic signals of the preset magnitude only at the centers of the subbands in which the spectral components are located and a center of a subband indicated by the new subband location information; and

the performing frequency mixing for the to-be-down-converted signal and the harmonic signals that correspond to the spectral components, to obtain a down-converted signal, includes:

performing frequency mixing for the to-be-down-converted signal, the harmonic signals that correspond to the spectral components, and the harmonic signal in the subband indicated by the new subband location information, to obtain the down-converted signal.

A second aspect of the present invention provides a signal processing apparatus, including:

a first determining unit, configured to determine location information of spectral components of a to-be-down-converted signal in subbands resulting from pre-division, where a bandwidth of the subband resulting from pre-division depends on a cycle of a local-frequency signal used for frequency mixing;

a second determining unit, configured to determine, according to the location information of the spectral components in the subbands resulting from pre-division determined by the first determining unit, a spectral support sequence of the local-frequency signal that corresponds to the to-be-down-converted signal, where the spectral support sequence of the local-frequency signal is used to instruct a local-frequency signal generation apparatus to generate harmonic signals of a preset magnitude only at centers of subbands in which the spectral components are located; and

a frequency mixing unit, configured to perform frequency mixing for the to-be-down-converted signal and the harmonic signals that correspond to the spectral components and that are determined by the second determining unit, to obtain a down-converted signal.

With reference to the second aspect, in a first possible implementation manner, the apparatus further includes:

a third determining unit, configured to, when the first determining unit determines the location information of the spectral components of the to-be-down-converted signal in the subbands resulting from pre-division, determine a type of an aliasing mode and a quantity of aliased signals included in each aliasing mode, where the aliasing mode is used to describe a status of aliased signals included in different frequency band ranges; and

a fourth determining unit, configured to determine a measurement matrix used for describing a frequency mixing and analog-to-digital conversion sampling process, according to a quantity of the subbands resulting from pre-division and the quantity of aliased signals included in each aliasing mode determined by the third determining unit.

With reference to the first possible implementation manner of the second aspect, in a second possible implementation manner,

the fourth determining unit is configured to determine a quantity of columns of the measurement matrix according to the quantity of the subbands resulting from pre-division, and determine a quantity of rows of the measurement matrix according to a quantity of aliased signals included in an aliasing mode that includes a greatest quantity of aliased signals.

With reference to the first or the second possible implementation manner of the second aspect, in a third possible implementation manner, the apparatus further includes:

a fifth determining unit, configured to determine, according to the quantity of aliased signals included in each aliasing mode determined by the third determining unit and the measurement matrix determined by the fourth determining unit, a mode measurement matrix that corresponds to each aliasing mode, where the mode measurement matrix is a sub-matrix formed according to a column, of the measurement matrix, that corresponds to location information of a subband in which a spectral component corresponding to a mode aliased signal is located, where the mode aliased signal is an aliased signal included in the aliasing mode.

With reference to the third possible implementation manner of the second aspect, in a fourth possible implementation manner, the apparatus further includes:

a sixth determining unit, configured to determine, according to an initial subband set, a non-full-column-rank matrix in the mode measurement matrices determined by the fifth determining unit, where the initial subband set is a set of location information of the subbands in which the spectral components are located; and

an adjusting unit, configured to add new subband location information to the initial subband set according to a preset policy, to change the non-full-column-rank matrix determined by the sixth determining unit to a full-column-rank matrix.

With reference to the fourth possible implementation manner of the second aspect, in a fifth possible implementation manner,
the adjusting unit is configured to determine, according to the preset policy, the new subband location information added to the initial subband set, and re-determine a mode measurement matrix of each aliasing mode according to the new subband location information and the location information of the subbands in which the spectral components are located, to change the non-full-column-rank matrix to the full-column-rank matrix.

With reference to the fifth possible implementation manner of the second aspect, in a sixth possible implementation manner,
the second determining unit is configured to determine, according to the location information of the spectral components in the subbands resulting from pre-division and the new subband location information, the spectral support sequence of the local-frequency signal that corresponds to the to-be-down-converted signal, where the spectral support sequence of the local-frequency signal is used to instruct the local-frequency signal generation apparatus to generate harmonic signals of the preset magnitude only at the centers of the subbands in which the spectral components are located and a center of a subband indicated by the new subband location information; and
the frequency mixing unit is configured to perform frequency mixing for the to-be-down-converted signal, the harmonic signals that correspond to the spectral components, and the harmonic signal in the subband indicated by the new subband location information, to obtain the down-converted signal.

A third aspect of the present invention provides a signal receiver, including an input device, an output device, a memory, and a processor, where
the processor is configured to execute the following steps:

determining location information of spectral components of a to-be-down-converted signal in subbands resulting from pre-division, where a bandwidth of the subband resulting from pre-division depends on a cycle of a local-frequency signal used for frequency mixing;
determining, according to the location information of the spectral components in the subbands resulting from pre-division, a spectral support sequence of the local-frequency signal that corresponds to the to-be-down-converted signal, where the spectral support sequence of the local-frequency signal is used to instruct a local-frequency signal generation apparatus to generate harmonic signals of a preset magnitude only at centers of subbands in which the spectral components are located; and
performing frequency mixing for the to-be-down-converted signal and the harmonic signals that correspond to the spectral components, to obtain a down-converted signal.

A fourth aspect of the present invention provides a signal receiving system, including an antenna, a signal processing apparatus, and a local-frequency signal generation apparatus, where
the antenna is configured to receive the to-be-down-converted signal;
the signal processing apparatus is configured to: determine location information of spectral components of the to-be-down-converted signal in subbands resulting from pre-division, where a bandwidth of the subband resulting from pre-division depends on a cycle of a local-frequency signal used for frequency mixing; and determine, according to the location information of the spectral components in the subbands resulting from pre-division, a spectral support sequence of the local-frequency signal that corresponds to the to-be-down-converted signal, where the spectral support sequence of the local-frequency signal is used to instruct the local-frequency signal generation apparatus to generate harmonic signals of a preset magnitude only at centers of subbands in which the spectral components are located;
the local-frequency signal generation apparatus is configured to generate harmonic signals of the preset magnitude at the centers of the subbands in which the spectral components are located, and send the harmonic signals to the signal processing apparatus; and
the signal processing apparatus is further configured to perform frequency mixing for the to-be-down-converted signal and the harmonic signals that correspond to the spectral components, to obtain a down-converted signal.

In the embodiments of the present invention, location information of spectral components of a to-be-down-converted signal in subbands resulting from pre-division is first determined, where a bandwidth of the subband resulting from pre-division depends on a cycle of a local-frequency signal used for frequency mixing; a spectral support sequence of the local-frequency signal that corresponds to the to-be-down-converted signal is determined according to the location information of the spectral components in the subbands resulting from pre-division, where the spectral support sequence of the local-frequency signal is used to instruct a local-frequency signal generation apparatus to generate harmonic signals of a preset magnitude only at centers of subbands in which the spectral components are located; and frequency mixing is performed for the to-be-down-converted signal and the harmonic signals that correspond to the spectral components, to obtain a down-converted signal. Compared with the prior art in which a signal-to-noise ratio of an aliased signal is reduced because noise in all subbands is all aliased into a baseband when multiple signals in different frequency bands are frequency-mixed with a local-frequency signal that has harmonic signals in all subbands, the signal processing method provided by the embodiments of the present invention, in which a to-be-down-converted signal is frequency-mixed with only harmonic signals at centers of subbands in which spectral components of the to-be-down-converted signal are located, improves a signal-to-noise ratio of an aliased signal after the frequency mixing.

## BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person skilled in the art may still derive other drawings from these accompanying drawings without creative efforts.

FIG. 1 is a schematic diagram of an embodiment of a signal processing method provided by the embodiments of the present invention;
FIG. 2 is a schematic diagram of another embodiment of the signal processing method provided by the embodiments of the present invention;
FIG. 3 is a schematic diagram of another embodiment of the signal processing method provided by the embodiments of the present invention;
FIG. 4 is a schematic diagram of another embodiment of the signal processing method provided by the embodiments of the present invention;
FIG. 5 is a schematic diagram of another embodiment of the signal processing method provided by the embodiments of the present invention;
FIG. 6 is a schematic diagram of an embodiment of a signal processing apparatus provided by the embodiments of the present invention;
FIG. 7 is a schematic diagram of another embodiment of the signal processing apparatus provided by the embodiments of the present invention;
FIG. 8 is a schematic diagram of another embodiment of the signal processing apparatus provided by the embodiments of the present invention;
FIG. 9 is a schematic diagram of another embodiment of the signal processing apparatus provided by the embodiments of the present invention;
FIG. 10 is a schematic diagram of an embodiment of a signal receiver provided by the embodiments of the present invention; and
FIG. 11 is a schematic diagram of an embodiment of a signal receiving system provided by the embodiments of the present invention.

## DESCRIPTION OF EMBODIMENTS

Embodiments of the present invention provide a signal processing method. When a to-be-down-converted signal includes multiple signals in different frequency bands, and one frequency mixing channel is used for frequency mixing, the to-be-down-converted signal is frequency-mixed with only harmonic signals at centers of subbands in which spectral components of the to-be-down-converted signal are located, which improves a signal-to-noise ratio of an aliased signal after the frequency mixing. The embodiments of the present invention further provide a corresponding apparatus and system. Respective detailed descriptions are given below.

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person skilled in the art based on the embodiments of the present invention without creative efforts shall fall within the protection scope of the present invention.

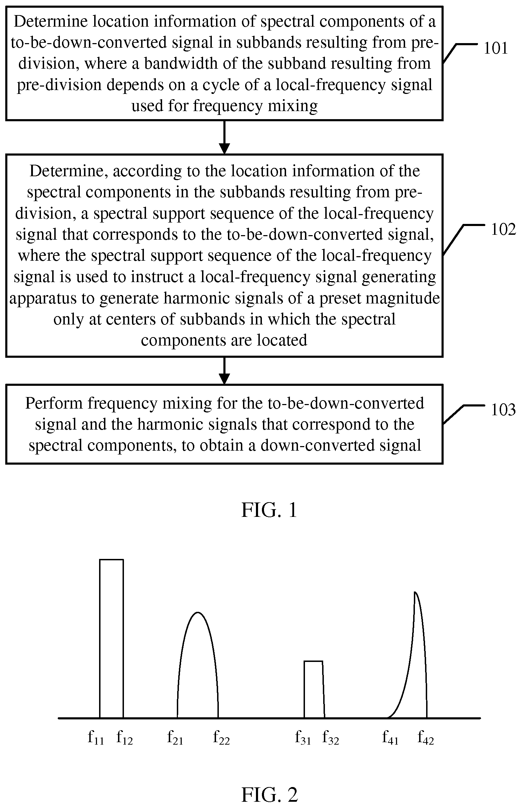

With reference to FIG. 1, an embodiment of the signal processing method provided by the embodiments of the present invention includes:

101. Determine location information of spectral components of a to-be-down-converted signal in subbands resulting from pre-division, where a bandwidth of the subband resulting from pre-division depends on a cycle of a local-frequency signal used for frequency mixing.

The to-be-down-converted signal in this embodiment of the present invention may include multiple narrowband signals in different frequency bands.

Division into subbands is performed in advance according to the cycle of the local-frequency signal used for frequency mixing. $T_p$ is used to represent a cycle of a sequence square wave, and a bandwidth of a subband is defined as $f_p = 1/T_p$. An entire receivable radio frequency range can be divided into $L_0$ subbands.

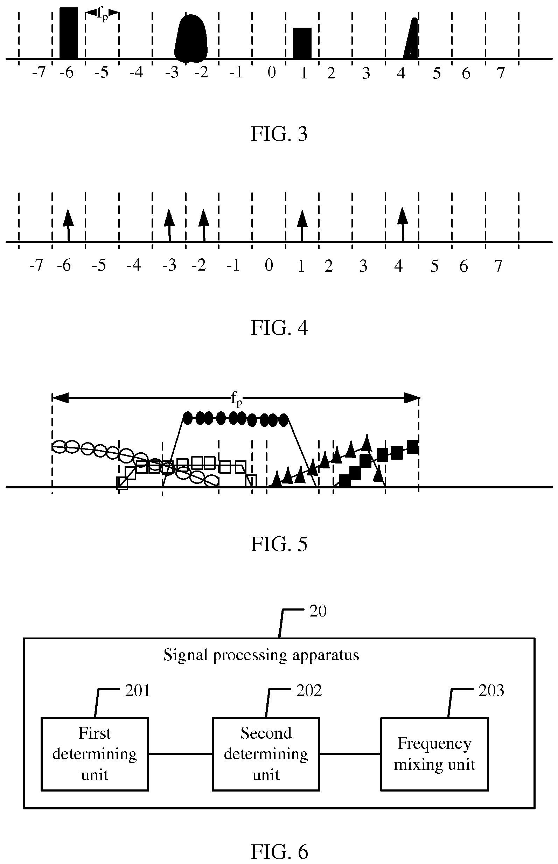

The location information of the spectral components of the to-be-down-converted signal in the subbands resulting from pre-division may be understood with reference to FIG. 2 and FIG. 3. FIG. 2 shows a to-be-down-converted signal in this embodiment of the present invention. The to-be-down-converted signal includes four signals in different frequency bands. The frequency bands are f11 to f12, f21 to f22, f31 to f32, and f41 to f42, respectively. Through time-domain and frequency-domain transformation, spectral components of the signals of the four frequency bands can be determined. It is assumed that the entire receivable radio frequency range can be divided into 15 subbands, where a subband in the middle may be identified as 0, a left side is a negative direction and is represented by consecutive negative integers, and a right side is a positive direction and is represented by consecutive positive integers. With reference to FIG. 3, FIG. 3 shows location distribution of the spectral components of the signals of the four frequency bands in the subbands. It can be seen from FIG. 3 that, the signals of the four frequency bands are distributed in five subbands, and location numbers of the subbands with a spectral component are -6, -3, -2, 1, and 4, respectively, that is, location information of the spectral components of the to-be-down-converted signal in the subbands resulting from pre-division is -6, -3, -2, 1, and 4, respectively.

102. Determine, according to the location information of the spectral components in the subbands resulting from pre-division, a spectral support sequence of the local-frequency signal that corresponds to the to-be-down-converted signal, where the spectral support sequence of the local-frequency signal is used to instruct a local-frequency signal generation apparatus to generate harmonic signals of a preset magnitude only at centers of subbands in which the spectral components are located.

With reference to FIG. 4, FIG. 4 shows locations of harmonic signals generated for the signals distributed in the five subbands in FIG. 3. That is, harmonic signals of the preset magnitude are generated at the centers of the subbands in which the spectral components are located.

It is assumed that the spectral support sequence of the local-frequency signal is described by 0 and 1, where a subband with a harmonic signal is represented by 1, and a subband without a harmonic signal is represented by 0. The spectral support sequence of the local-frequency signal that FIG. 4 corresponds to may be expressed as (0, 1, 0, 0, 1, 1, 0, 0, 1, 0, 0, 1, 0, 0, 0). Then, the local-frequency signal generation apparatus generates a harmonic signal of the preset magnitude at a location identified by 1 in the sequence.

103. Perform frequency mixing for the to-be-down-converted signal and the harmonic signals that correspond to the spectral components, to obtain a down-converted signal.

With reference to FIG. 5, FIG. 5 is a schematic diagram of the down-converted signal after the signals of the four different frequency bands that are in the five subbands in FIG. 3 are frequency-mixed with the five local-frequency signals.

According to the signal processing method in this embodiment of the present invention, location information of spectral components of a to-be-down-converted signal in subbands resulting from pre-division is determined, where a bandwidth of the subband resulting from pre-division depends on a cycle of a local-frequency signal used for frequency mixing; a spectral support sequence of the local-frequency signal that corresponds to the to-be-down-converted signal is determined according to the location information of the spectral components in the subbands resulting from pre-division, where the spectral support sequence of the local-frequency signal is used to instruct a local-frequency signal generation apparatus to generate harmonic signals of a preset magnitude only at centers of subbands in which the spectral components are located; and frequency mixing is performed for the to-be-down-converted signal and the harmonic signals that correspond to the spectral components, to obtain a down-converted signal. Compared with the prior art in which a signal-to-noise ratio of an aliased signal is reduced because noise in all subbands is all aliased into a baseband when multiple signals in different frequency bands are frequency-mixed with a local-frequency signal that has harmonic signals in all subbands, the signal processing method provided by this embodiment of the present invention, in which a to-be-down-converted signal is frequency-mixed with only harmonic signals at centers of subbands in which spectral components of the to-be-down-converted signal are located, improves a signal-to-noise ratio of an aliased signal after the frequency mixing.

Optionally, on the basis of the foregoing embodiment, in another embodiment of the signal processing method provided by the embodiments of the present invention, during the determining location information of spectral components of a to-be-down-converted signal in subbands resulting from pre-division, the method may further include:

determining a type of an aliasing mode and a quantity of aliased signals included in each aliasing mode, where the aliasing mode is used to describe a status of aliased signals included in different frequency band ranges; and determining a measurement matrix used for describing a frequency mixing and analog-to-digital conversion sampling process, according to a quantity of the subbands resulting from pre-division and the quantity of aliased signals included in each aliasing mode.

The determining a measurement matrix according to a quantity of the subbands resulting from pre-division and the quantity of aliased signals included in each aliasing mode, may include:

determining a quantity of columns of the measurement matrix according to the quantity of the subbands resulting from pre-division; and

determining a quantity of rows of the measurement matrix, according to a quantity of aliased signals included in an aliasing mode that includes a greatest quantity of aliased signals.

In this embodiment of the present invention, an aliasing mode is used to describe a status of aliased signals included in different frequency band ranges. In a process of down-conversion using harmonic signals, after it is guaranteed that subbands with a signal all have a corresponding harmonic signal, a quantity of harmonic signals affects only noise and does not affect distribution of aliased signals. Therefore, the type of an aliasing mode and the quantity of the aliased signals included in each aliasing mode can be determined before frequency mixing.

As shown in FIG. 5, FIG. 5 shows signal distribution after the signals in the five subbands are aliased. Each subband signal is represented by one identifier. As shown in FIG. 5, five types of identifiers, namely, colorless circles, black circles, colorless squares, black squares, and black triangles, identify the signals in the five subbands, respectively. There are nine aliasing modes for the input signals of the four frequency bands after aliasing. In FIG. 5, each aliasing mode is separated by a dotted line. From left to right, the first aliasing mode includes one signal identified by colorless circles, the second aliasing mode includes two signals identified by colorless circles and colorless squares, the third aliasing mode includes three signals identified by colorless circles, colorless squares, and black circles, the fourth aliasing mode includes two signals identified by colorless squares and black circles, the fifth aliasing mode includes one signal identified by black circles, the sixth aliasing mode includes two signals identified by black circles and black triangles, the seventh aliasing mode includes one signal identified by black triangles, the eighth aliasing mode includes two signals identified by black triangles and black squares, and the ninth aliasing mode includes one signal identified by black squares.

During frequency mixing, a wanted signal is aliased on a baseband. A process of separating an aliased signal is actually a process of finding original signals by using an inverse matrix. To enable an aliased signal to be correctly separated, the measurement matrix that describes a process of obtaining a baseband sampling signal through frequency mixing sampling must have a full column rank.

A frequency mixing sampling process for a signal may be expressed in a frequency domain as: $Y(f) = AZ(f)$, where $Y(f)$ is a discrete Fourier transform of a sampling point, $Z(f)$ is a vector representation of division of a spectrum X(f) of a to-be-down-converted signal into subbands, and A is the measurement matrix.

It is assumed that a receivable frequency band range is divided into $L_0$ subbands, with a bandwidth of $f_p$. Then, the division of the spectrum $X(f)$ of the to-be-down-converted signal into subbands may be expressed using vectors as:

$$Z(f) = \begin{bmatrix} Z_{-L_0}(f) & \cdots & Z_0(f) & \cdots & Z_{L_0}(f) \end{bmatrix}^T,$$

where,

$$Z_i(f) = \begin{cases} X(f - if_p), f \in \left[ -\dfrac{f_p}{2}, \dfrac{f_p}{2} \right), & i = -L_0, \ldots, L_0 \\ 0, & otherwise \end{cases}.$$

Still refer to the scenario in FIG. 2 to FIG. 5. There are 15 subbands in the scenario. Therefore, a universal measurement matrix A has 15 columns, with numbers being 15 integers from -7 to +7. In the foregoing nine aliasing modes, the third aliasing mode which includes the greatest quantity of aliased signals includes three signals. Therefore, the universal measurement matrix $A$ has three rows. Identifiers of a middle row are from -7 to +7. A row above moves to the right by one column, and a row below moves to the left by one column. If a measurement matrix should have five rows or another quantity of rows, rows are moved also by using this moving method.

The thus obtained universal measurement matrix A is as follows:

$$A = \begin{bmatrix} a_{-6} & a_{-5} & a_{-4} & a_{-3} & a_{-2} & a_{-1} & a_0 & a_1 & a_2 & a_3 & a_4 & a_5 & a_6 & a_7 & 0 \\ a_{-7} & a_{-6} & a_{-5} & a_{-4} & a_{-3} & a_{-2} & a_{-1} & a_0 & a_1 & a_2 & a_3 & a_4 & a_5 & a_6 & a_7 \\ 0 & a_{-7} & a_{-6} & a_{-5} & a_{-4} & a_{-3} & a_{-2} & a_{-1} & a_0 & a_1 & a_2 & a_3 & a_4 & a_5 & a_6 \end{bmatrix}$$

Optionally, on the basis of the foregoing embodiment, in another embodiment of the signal processing method provided by the embodiments of the present invention, the method may further include:
determining, according to the quantity of aliased signals included in each aliasing mode and the measurement matrix, a mode measurement matrix that corresponds to each aliasing mode, where the mode measurement matrix is a sub-matrix formed according to a column, of the measurement matrix, that corresponds to location information of a subband in which a spectral component corresponding to a mode aliased signal is located, where the mode aliased signal is an aliased signal included in the aliasing mode.

After the determining a mode measurement matrix that corresponds to each aliasing mode, the method may further include:

determining a non-full-column-rank matrix in the mode measurement matrices according to an initial subband set, where the initial subband set is a set of location information of the subbands in which the spectral components are located; and
adding new subband location information to the initial subband set according to a preset policy, to change the non-full-column-rank matrix to a full-column-rank matrix.

The adding new subband location information to the initial subband set according to a preset policy, to change the non-full-column-rank matrix to a full-column-rank matrix, includes:

determining, according to the preset policy, the new subband location information added to the initial subband set; and
re-determining a mode measurement matrix of each aliasing mode according to the new subband location information and the location information of the subbands in which the spectral components are located, to change the non-full-column-rank matrix to the full-column-rank matrix.

In the scenario that FIG. 2 to FIG. 5 correspond to, as shown in FIG. 5, there are totally nine aliasing modes. In the first aliasing mode, there is only a signal in a subband with an identifier of -6. With reference to the universal measurement matrix $A$, a measurement matrix of the first aliasing mode may be obtained as:

$$A_1 = \begin{bmatrix} 0 \\ a_{-6} \\ 0 \end{bmatrix}$$

By analogy, mode measurement matrices of the nine aliasing modes, namely, $A_1$ to $A_9$, can be obtained, respectively, and the mode measurement matrices of the nine aliasing modes are not listed herein one by one. A full column rank is a prior art, meaning that a column rank is equal to a quantity of columns. That is, after an elementary transformation, there is no column that contains only 0s. Therefore, according to the obtained $A_1$ to $A_9$, it can be determined that $A_3$, $A_4$, and $A_6$ are non-full-column-rank matrices. The matrices $A_3$, $A_4$, and $A_6$ are expressed as follows:

$$A_3 = \begin{bmatrix} 0 & 0 & 0 \\ a_{-6} & a_1 & a_{-2} \\ 0 & 0 & a_{-3} \end{bmatrix}, \quad A_4 = \begin{bmatrix} 0 & 0 \\ a_{-6} & a_1 \\ 0 & 0 \end{bmatrix}, \text{ and } A_6 = \begin{bmatrix} 0 & 0 \\ a_{-6} & a_4 \\ 0 & 0 \end{bmatrix}$$

Actually, it can be determined from FIG. 3 that there are signals in only five subbands -6, -3, -2, 1, and 4. Therefore, the location information of the subbands in which the spectral components of the to-be-down-converted signal are located may be directly used to determine a non-full-column-rank matrix. -6, -3, -2, 1, and 4 can also be defined as an initial subband set T = {- 6,-3,-2,1,4}. Then, it is determined that $A_3$, $A_4$, and $A_6$ are non-full-column-rank matrices by directly using information in the initial subband set.

To enable an aliased signal to be correctly separated, a matrix must be a full-column-rank matrix for every mode. Therefore, $A_3$, $A_4$, and $A_6$ need to be changed to full-column-rank matrices. Regarding how the change is made, a solution provided by this embodiment of the present invention is introducing new subband location information to the initial subband set, and then adjusting a non-full-column-rank matrix to make it a full-column-rank matrix by using the subband set to which the new subband location information is added.

A condition how the new subband location information is selected is: A selected subband should make column ranks of a greatest quantity of matrices increase but affect as little as possible matrices whose column ranks cannot be increased by the subband, to avoid increasing condition quantities of those matrices. When a subband increases column ranks of some matrices but makes condition quantities of other matrices increase as well, a selection may be made by using parameters such as a width of a frequency band covered by each matrix as a weight. This process is repeated until all matrices have a full column rank. In the provided example, obviously, if -5 is added to T, all matrices can have a full column rank. In this way, it can be determined that a minimum subband set that can enable every mode measurement matrix to have a full column rank is T = {- 6,-5,-3,-2,1,4}. However, if another subband is added, some of the matrices still cannot have a full column rank, and still a new subband needs to be selected. As a result, T cannot be a minimum set, and moreover condition quantities of some matrices will increase.

Optionally, on the basis of the foregoing embodiment, in another embodiment of the signal processing method provided by the embodiments of the present invention, the determining, according to the location information of the spectral components in the subbands resulting from pre-division, a spectral support sequence of the local-frequency signal that corresponds to the to-be-down-converted signal, where the spectral support sequence of the local-frequency signal is used to instruct a local-frequency signal generation apparatus to generate harmonic signals of a preset magnitude only at centers of subbands in which the spectral components are located, may include:

determining, according to the location information of the spectral components in the subbands resulting from pre-division and the new subband location information, the spectral support sequence of the local-frequency signal that corresponds to the to-be-down-converted signal, where the spectral support sequence of the local-frequency signal is used to instruct the local-frequency signal generation apparatus to generate harmonic signals of the preset magnitude only at the centers of the subbands in which the spectral components are located and a center of a subband indicated by the new subband location information; and

the performing frequency mixing for the to-be-down-converted signal and the harmonic signals that correspond to the spectral components, to obtain a down-converted signal, may include:

performing frequency mixing for the to-be-down-converted signal, the harmonic signals that correspond to the spectral components, and the harmonic signal in the subband indicated by the new subband location information, to obtain the down-converted signal.

In this embodiment of the present invention, the foregoing minimum subband set is determined, for example, the foregoing determined minimum subband set is a result of adding the new subband location information -5 on the basis of the initial subband set. In this way, when frequency mixing is performed for signals, the spectral support sequence of the local-frequency signal needs to be adjusted, to change the original spectral support sequence of the local-frequency signal expressed as (0, 1, 0, 0, 1, 1, 0, 0, 1, 0, 0, 1, 0, 0, 0) to (0, 1, 1, 0, 1, 1, 0, 0, 1, 0, 0, 1, 0, 0, 0). As a result, the local-frequency signal generation apparatus also generates a harmonic signal of the preset magnitude at a center of the subband -5.

With reference to FIG. 6, an embodiment of a signal processing apparatus 20 provided by the embodiments of the present invention includes:

a first determining unit 201, configured to determine location information of spectral components of a to-be-down-converted signal in subbands resulting from pre-division, where a bandwidth of the subband resulting from pre-division depends on a cycle of a local-frequency signal used for frequency mixing;

a second determining unit 202, configured to determine, according to the location information of the spectral components in the subbands resulting from pre-division determined by the first determining unit 201, a spectral support sequence of the local-frequency signal that corresponds to the to-be-down-converted signal, where the spectral support sequence of the local-frequency signal is used to instruct a local-frequency signal generation apparatus to generate harmonic signals of a preset magnitude only at centers of subbands in which the spectral components are located; and

a frequency mixing unit 203, configured to perform frequency mixing for the to-be-down-converted signal and the harmonic signals that correspond to the spectral components and that are determined by the second determining unit 202, to obtain a down-converted signal.

In this embodiment of the present invention, a first determining unit 201 determines location information of spectral components of a to-be-down-converted signal in subbands resulting from pre-division, where a bandwidth of the subband resulting from pre-division depends on a cycle of a local-frequency signal used for frequency mixing; a second determining unit 202 determines, according to the location information of the spectral components in the subbands resulting from pre-division determined by the first determining unit 201, a spectral support sequence of the local-frequency signal that corresponds to the to-be-down-converted signal, where the spectral support sequence of the local-frequency signal is used to instruct a local-frequency signal generation apparatus to generate harmonic signals of a preset magnitude only at centers of subbands in which the spectral components are located; and a frequency mixing unit 203 performs frequency mixing for the to-be-down-converted signal and the harmonic signals that correspond to the spectral components and that are determined by the second determining unit 202, to obtain a down-converted signal. Compared with the prior art in which a signal-to-noise ratio of an aliased signal is reduced because noise in all subbands is all aliased into a baseband when multiple signals in different frequency bands are frequency-mixed with a local-frequency signal that has harmonic signals in all subbands, the signal processing apparatus provided by this embodiment of the present invention, in which a to-be-down-converted signal is frequency-mixed with only harmonic signals at centers of subbands in which spectral components of the to-be-down-converted signal are located, improves a signal-to-noise ratio of an aliased signal after the frequency mixing.

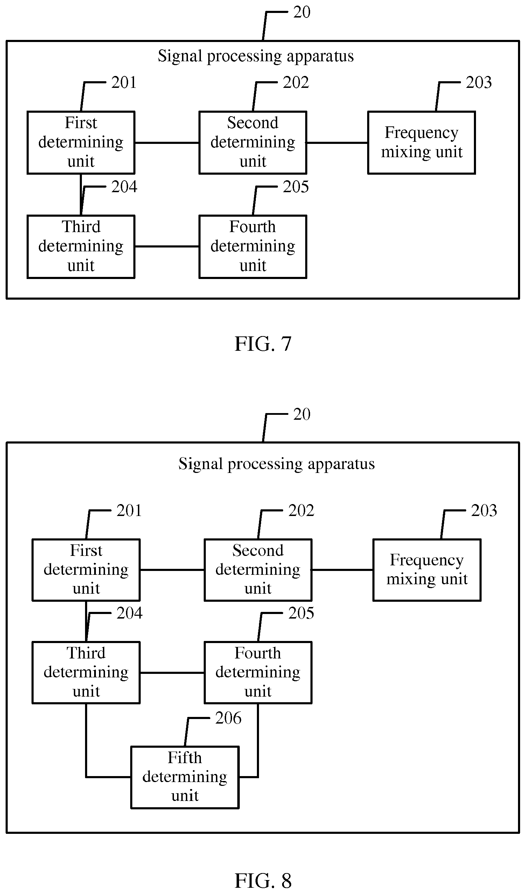

Optionally, on the basis of the foregoing embodiment that FIG. 6 corresponds to, with reference to FIG. 7, in another embodiment of the signal processing apparatus provided by the embodiments of the present invention, the apparatus 20 further includes:

a third determining unit 204, configured to, when the first determining unit 201 determines the location information of the spectral components of the to-be-down-converted signal in the subbands resulting from pre-division, determine a type of an aliasing mode and a quantity of aliased signals included in each aliasing mode, where the aliasing mode is used to describe a status of aliased signals included in different frequency band ranges; and
a fourth determining unit 205, configured to determine a measurement matrix used for describing a frequency mixing and analog-to-digital conversion sampling process, according to a quantity of the subbands resulting from pre-division and the quantity of aliased signals included in each aliasing mode determined by the third determining unit 204.

On the basis of the foregoing embodiment that FIG. 7 corresponds to, in another embodiment of the signal processing apparatus provided by the embodiments of the present invention,
the fourth determining unit 205 is configured to determine a quantity of columns of the measurement matrix according to the quantity of the subbands resulting from pre-division, and determine a quantity of rows of the measurement matrix according to a quantity of aliased signals included in an aliasing mode that includes a greatest quantity of aliased signals.

On the basis of the foregoing embodiment that FIG. 7 corresponds to, with reference to FIG. 8, in another embodiment of the signal processing apparatus provided by the embodiments of the present invention, the apparatus 20 further includes:
a fifth determining unit 206, configured to determine, according to the quantity of aliased signals included in each aliasing mode determined by the third determining unit 204 and the measurement matrix determined by the fourth determining unit 205, a mode measurement matrix that corresponds to each aliasing mode, where the mode measurement matrix is a sub-matrix formed according to a column, of the measurement matrix, that corresponds to location information of a subband in which a spectral component corresponding to a mode aliased signal is located, where the mode aliased signal is an aliased signal included in the aliasing mode.

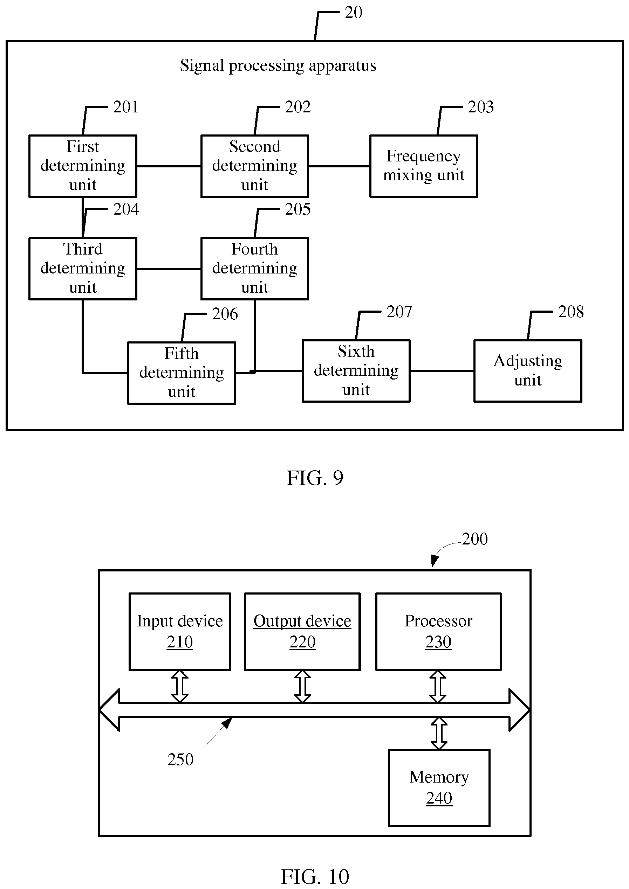

On the basis of the foregoing embodiment that FIG. 8 corresponds to, with reference to FIG. 9, in another embodiment of the signal processing apparatus provided by the embodiments of the present invention, the apparatus 20 further includes:

a sixth determining unit 207, configured to determine, according to an initial subband set, a non-full-column-rank matrix in the mode measurement matrices determined by the fifth determining unit 206, where the initial subband set is a set of location information of the subbands in which the spectral components are located; and
an adjusting unit 208, configured to add new subband location information to the initial subband set according to a preset policy, to change the non-full-column-rank matrix determined by the sixth determining unit 207 to a full-column-rank matrix.

On the basis of the foregoing embodiment that FIG. 9 corresponds to, in another embodiment of the signal processing apparatus provided by the embodiments of the present invention,
the adjusting unit 208 is configured to determine, according to the preset policy, the new subband location information added to the initial subband set, and re-determine a mode measurement matrix of each aliasing mode according to the new subband location information and the location information of the subbands in which the spectral components are located, to change the non-full-column-rank matrix to the full-column-rank matrix.

On the basis of the foregoing embodiment that FIG. 9 corresponds to, in another embodiment of the signal processing apparatus provided by the embodiments of the present invention,
the second determining unit 202 is configured to determine, according to the location information of the spectral components in the subbands resulting from pre-division and the new subband location information, the spectral support sequence of the local-frequency signal that corresponds to the to-be-down-converted signal, where the spectral support sequence of the local-frequency signal is used to instruct the local-frequency signal generation apparatus to generate harmonic signals of the preset magnitude only at the centers of the subbands in which the spectral components are located and a center of a subband indicated by the new subband location information; and

the frequency mixing unit 203 is configured to perform frequency mixing for the to-be-down-converted signal, the harmonic signals that correspond to the spectral components, and the harmonic signal in the subband indicated by the new subband location information, to obtain the down-converted signal.

FIG. 10 is a schematic structural diagram of a signal receiver 200 according to an embodiment of the present invention. The signal receiver 200 may include an input device 210, an output device 220, a processor 230, and a memory 240.

The memory 240 may include a read-only memory and a random access memory, and provides an instruction and data to the processor 230. A part of the memory 240 may further include a non-volatile random access memory (NVRAM).

The memory 240 stores the following elements: an executable module or data structure, or a subset thereof, or an extension set thereof;

operation instructions: including various operation instructions used to implement various operations; and

an operating system: including various system programs used to implement various basic services and process hardware-based tasks.

In this embodiment of the present invention, the processor 230 executes the following operations by calling the operation instructions stored in the memory 240 (the operation instructions may be stored in the operating system):

determining location information of spectral components of a to-be-down-converted signal in subbands resulting from pre-division, where a bandwidth of the subband resulting from pre-division depends on a cycle of a local-frequency signal used for frequency mixing;

determining, according to the location information of the spectral components in the subbands resulting from pre-division, a spectral support sequence of the local-frequency signal that corresponds to the to-be-down-converted signal, where the spectral support sequence of the local-frequency signal is used to instruct a local-frequency signal generation apparatus to generate harmonic signals of a preset magnitude only at centers of subbands in which the spectral components are located; and

performing frequency mixing for the to-be-down-converted signal and the harmonic signals that correspond to the spectral components, to obtain a down-converted signal.

In this embodiment of the present invention, when the to-be-down-converted signal includes multiple signals in different frequency bands, and one frequency mixing channel is used for frequency mixing, the signal receiver 200 can improve a signal-to-noise ratio of an aliased signal after the frequency mixing.

The processor 230 controls the operations of the signal receiver 200. The processor 230 may also be called a CPU (Central Processing Unit, central processing unit). The memory 240 may include a read-only memory and a random access memory, and provides an instruction and data to the processor 230. A part of the memory 240 may further include a non-volatile random access memory (NVRAM). In actual application, components of the signal receiver 200 are coupled together through a bus system 250, where the bus system 250 may further include a power bus, a control bus, a state signal bus, and the like, in addition to a data bus. However, for a clearer description, various buses in the figure are marked as the bus system 250.

The foregoing method disclosed by the embodiments of the present invention may be applied to the processor 230, or be implemented by the processor 230. The processor 230 may be an integrated circuit chip that has a signal processing capability. In an implementation process, the steps of the foregoing method may be completed by using a hardware-form integrated logic circuit or software-form instructions in the processor 230. The foregoing processor 230 may be a universal processor, a digital signal processor (DSP), an application specific integrated circuit (ASIC), a field programmable gate array (FPGA) or other programmable logic device, a separate gate or transistor logic device, or a separate hardware component, and can implement or execute the method, steps, and logical block diagrams disclosed by the embodiments of the present invention. The universal processor may be a microprocessor, or the processor may be any conventional processor or the like. The steps of the method disclosed by the embodiments of the present invention may be directly executed and completed by a hardware decoding processor, or be executed and completed by a combination of hardware and software modules in the decoding processor. A software module may be located in a storage medium mature in the field, such as a random access memory, a flash memory, a read-only memory, a programmable read-only memory or electrically erasable programmable memory, or a register. The storage medium is located in the memory 240. The processor 230 reads information in the memory 240 and completes the steps of the foregoing method in combination with its hardware.

Optionally, the processor 230 may specifically determine a type of an aliasing mode and a quantity of aliased signals included in each aliasing mode, where the aliasing mode is used to describe a status of aliased signals included in different frequency band ranges, and determine a measurement matrix used for describing a frequency mixing and analog-to-digital conversion sampling process, according to a quantity of the subbands resulting from pre-division and the quantity of aliased signals included in each aliasing mode.

Optionally, the processor 230 may specifically determine a quantity of columns of the measurement matrix according to the quantity of the subbands resulting from pre-division, and determine a quantity of rows of the measurement matrix according to a quantity of aliased signals included in an aliasing mode that includes a greatest quantity of aliased signals.

Optionally, the processor 230 may specifically determine, according to the quantity of aliased signals included in each aliasing mode and the measurement matrix, a mode measurement matrix that corresponds to each aliasing mode, where the mode measurement matrix is a sub-matrix formed according to a column, of the measurement matrix, that corresponds to location information of a subband in which a spectral component corresponding to a mode aliased signal is located, where the mode aliased signal is an aliased signal included in the aliasing mode.

Optionally, the processor 230 can specifically determine a non-full-column-rank matrix in the mode measurement matrices according to an initial subband set, where the initial subband set is a set of location information of the subbands in which the spectral components are located, and add new subband location information to the initial subband set according to a preset policy, to change the non-full-column-rank matrix to a full-column-rank matrix.

Optionally, the processor 230 may specifically determine, according to the preset policy, the new subband location information added to the initial subband set, and re-determine a mode measurement matrix of each aliasing mode according to the new subband location information and the location information of the subbands in which the spectral components are located, to change the non-full-column-rank matrix to the full-column-rank matrix.

Optionally, the processor 230 may specifically determine, according to the location information of the spectral components in the subbands resulting from pre-division and the new subband location information, the spectral support sequence of the local-frequency signal that corresponds to the to-be-down-converted signal, where the spectral support sequence of the local-frequency signal is used to instruct the local-frequency signal generation apparatus to generate harmonic signals of the preset magnitude only at the centers of the subbands in which the spectral components are located and a center of a subband indicated by the new subband location information, and perform frequency mixing for the to-be-down-converted signal, the harmonic signals that correspond to the spectral components, and the harmonic signal in the subband indicated by the new subband location information, to obtain the down-converted signal.

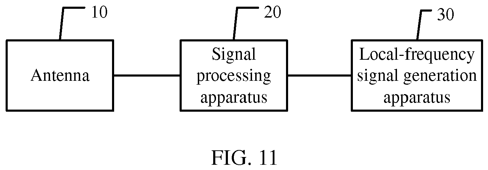

With reference to FIG. 11, an embodiment of a signal receiving system provided by the embodiments of the present invention includes an antenna 10, a signal processing apparatus 20, and a local-frequency signal generation apparatus 30, where

the antenna 10 is configured to receive the to-be-down-converted signal;

the signal processing apparatus 20 is configured to: determine location information of spectral components of the to-be-down-converted signal in subbands resulting from pre-division, where a bandwidth of the subband resulting from pre-division depends on a cycle of a local-frequency signal used for frequency mixing; and determine, according to the location information of the spectral components in the subbands resulting from pre-division, a spectral support sequence of the local-frequency signal that corresponds to the to-be-down-converted signal, where the spectral support sequence of the local-frequency signal is used to instruct the local-frequency signal generation apparatus to generate harmonic signals of a preset magnitude only at centers of subbands in which the spectral components are located;

the local-frequency signal generation apparatus 30 is configured to generate harmonic signals of the preset magnitude at the centers of the subbands in which the spectral components are located, and send the harmonic signals to the signal processing apparatus 20; and

the signal processing apparatus 20 is further configured to perform frequency mixing for the to-be-down-converted signal and the harmonic signals that correspond to the spectral components, to obtain a down-converted signal.

Surely, the signal receiving system in this embodiment of the present invention may further include other devices, which have little relevance with the present invention and therefore are not introduced in this embodiment of the present invention one by one.

A person of ordinary skill in the art may understand that all or some of the steps of the methods in the embodiments may be implemented by a program instructing relevant hardware. The program may be stored in a computer readable storage medium. The storage medium may include: a ROM, a RAM, a magnetic disk, or an optical disc.

The service processing method, apparatus, and system provided in the embodiments of the present invention have been described in detail above. The principle and the implementation manners of the present invention are described herein by using specific examples. The descriptions about the embodiments are merely provided to help understand the method and the core idea of the present invention. In addition, persons of ordinary skill in the art can make variations and modifications to the present invention regarding the specific implementation manners and the application scope, according to the idea of the present invention. Therefore, the content of this specification shall not be construed as a limitation on the present invention.

**Claims**

1. A signal processing method, comprising the steps of:

   determining location information of spectral components of a to-be-down-converted signal in subbands resulting from pre-division, wherein a bandwidth of the subband resulting from pre-division depends on a cycle of a local-frequency signal used for frequency mixing; and
   determining, according to the location information of the spectral components in the subbands resulting from pre-division, a spectral support sequence of the local-frequency signal that corresponds to the to-be-down-converted signal;
   **characterised by** the steps of:

   instructing, using the spectral support sequence of the local-frequency signal, a local-frequency signal generation apparatus to generate harmonic signals of a preset magnitude only at centers of subbands in which the spectral components are located; and
   performing frequency mixing for the to-be-down-converted signal and the harmonic signals that correspond to the spectral components, to obtain a down-converted signal.

2. The method according to claim 1, wherein during the determining location information of spectral components of a to-be-down-converted signal in subbands resulting from pre-division, the method further comprises:

   determining a type of an aliasing mode and a quantity of aliased signals comprised in each aliasing mode, wherein the aliasing mode is used to describe a status of aliased signals comprised in different frequency band ranges; and
   determining a measurement matrix used for describing a frequency mixing and analog-to-digital conversion sampling process, according to a quantity of the subbands resulting from pre-division and the quantity of aliased signals comprised in each aliasing mode.

3. The method according to claim 2, wherein the determining a measurement matrix used for describing a frequency mixing and analog-to-digital conversion sampling process, according to a quantity of the subbands resulting from pre-division and the quantity of aliased signals comprised in each aliasing mode, comprises:

   determining a quantity of columns of the measurement matrix according to the quantity of the subbands resulting from pre-division; and
   determining a quantity of rows of the measurement matrix, according to a quantity of aliased signals comprised in an aliasing mode that comprises a greatest quantity of aliased signals.

4. The method according to claim 2 or 3, wherein the method further comprises:
   determining, according to the quantity of aliased signals comprised in each aliasing mode and the measurement matrix, a mode measurement matrix that corresponds to each aliasing mode, wherein the mode measurement matrix is a sub-matrix formed according to a column, of the measurement matrix, that corresponds to location information of a subband in which a spectral component corresponding to a mode aliased signal is located, wherein the mode aliased signal is an aliased signal comprised in the aliasing mode.

5. The method according to claim 4, wherein after the determining a mode measurement matrix that corresponds to each aliasing mode, the method further comprises:

   determining a non-full-column-rank matrix in the mode measurement matrices according to an initial subband set, wherein the initial subband set is a set of location information of the subbands in which the spectral components are located; and
   adding new subband location information to the initial subband set according to a preset policy, to change the non-full-column-rank matrix to a full-column-rank matrix.

6. The method according to claim 5, wherein the adding new subband location information to the initial subband set according to a preset policy, to change the non-full-column-rank matrix to a full-column-rank matrix, comprises:

   determining, according to the preset policy, the new subband location information added to the initial subband set; and

re-determining a mode measurement matrix of each aliasing mode according to the new subband location information and the location information of the subbands in which the spectral components are located, to change the non-full-column-rank matrix to the full-column-rank matrix.

7. The method according to claim 6, wherein:
the determining, according to the location information of the spectral components in the subbands resulting from pre-division, a spectral support sequence of the local-frequency signal that corresponds to the to-be-down-converted signal, wherein the spectral support sequence of the local-frequency signal is used to instruct a local-frequency signal generation apparatus to generate harmonic signals of a preset magnitude only at centers of subbands in which the spectral components are located, comprises:

determining, according to the location information of the spectral components in the subbands resulting from pre-division and the new subband location information, the spectral support sequence of the local-frequency signal that corresponds to the to-be-down-converted signal, wherein the spectral support sequence of the local-frequency signal is used to instruct the local-frequency signal generation apparatus to generate harmonic signals of the preset magnitude only at the centers of the subbands in which the spectral components are located and a center of a subband indicated by the new subband location information; and
the performing frequency mixing for the to-be-down-converted signal and the harmonic signals that correspond to the spectral components, to obtain a down-converted signal, comprises:
performing frequency mixing for the to-be-down-converted signal, the harmonic signals that correspond to the spectral components, and the harmonic signal in the subband indicated by the new subband location information, to obtain the down-converted signal.

8. A signal processing apparatus (20), comprising:

a first determining unit (201), configured to determine location information of spectral components of a to-be-down-converted signal in subbands resulting from pre-division, wherein a bandwidth of the subband resulting from pre-division depends on a cycle of a local-frequency signal used for frequency mixing;
a second determining unit (202), configured to determine, according to the location information of the spectral components in the subbands resulting from pre-division determined by the first determining unit, a spectral support sequence of the local-frequency signal that corresponds to the to-be-down-converted signal; and
a frequency mixing unit;
**characterised in that**:

the signal processing apparatus is configured to instruct, using the spectral support sequence of the local-frequency signal, a local-frequency signal generation apparatus to generate harmonic signals of a preset magnitude only at centers of subbands in which the spectral components are located; and
the frequency mixing unit (203) is configured to perform frequency mixing for the to-be-down-converted signal and the harmonic signals that correspond to the spectral components and that are determined by the second determining unit, to obtain a down-converted signal.

9. The apparatus according to claim 8, further comprising:

a third determining unit (204), configured to, when the first determining unit determines the location information of the spectral components of the to-be-down-converted signal in the subbands resulting from pre-division, determine a type of an aliasing mode and a quantity of aliased signals comprised in each aliasing mode, wherein the aliasing mode is used to describe a status of aliased signals comprised in different frequency band ranges; and
a fourth determining unit (205), configured to determine a measurement matrix used for describing a frequency mixing and analog-to-digital conversion sampling process, according to a quantity of the subbands resulting from pre-division and the quantity of aliased signals comprised in each aliasing mode determined by the third determining unit.

10. The apparatus according to claim 9, wherein:
the fourth determining unit is configured to determine a quantity of columns of the measurement matrix according to the quantity of the subbands resulting from pre-division, and determine a quantity of rows of the measurement matrix according to a quantity of aliased signals comprised in an aliasing mode that comprises a greatest quantity of aliased signals.

**11.** The apparatus according to claim 9 or 10, further comprising:
a fifth determining unit (206), configured to determine, according to the quantity of aliased signals comprised in each aliasing mode determined by the third determining unit and the measurement matrix determined by the fourth determining unit, a mode measurement matrix that corresponds to each aliasing mode, wherein the mode measurement matrix is a sub-matrix formed according to a column, of the measurement matrix, that corresponds to location information of a subband in which a spectral component corresponding to a mode aliased signal is located, wherein the mode aliased signal is an aliased signal comprised in the aliasing mode.

**12.** The apparatus according to claim 11, further comprising:

a sixth determining unit (207), configured to determine, according to an initial subband set, a non-full-column-rank matrix in the mode measurement matrices determined by the fifth determining unit, wherein the initial subband set is a set of location information of the subbands in which the spectral components are located; and
an adjusting unit (208), configured to add new subband location information to the initial subband set according to a preset policy, to change the non-full-column-rank matrix determined by the sixth determining unit to a full-column-rank matrix.

**13.** The apparatus according to claim 12, wherein:
the adjusting unit is configured to determine, according to the preset policy, the new subband location information added to the initial subband set, and re-determine a mode measurement matrix of each aliasing mode according to the new subband location information and the location information of the subbands in which the spectral components are located, to change the non-full-column-rank matrix to the full-column-rank matrix.

**14.** The apparatus according to claim 13, wherein:

the second determining unit is configured to determine, according to the location information of the spectral components in the subbands resulting from pre-division and the new subband location information, the spectral support sequence of the local-frequency signal that corresponds to the to-be-down-converted signal, wherein the spectral support sequence of the local-frequency signal is used to instruct the local-frequency signal generation apparatus to generate harmonic signals of the preset magnitude only at the centers of the subbands in which the spectral components are located and a center of a subband indicated by the new subband location information; and
the frequency mixing unit is configured to perform frequency mixing for the to-be-down-converted signal, the harmonic signals that correspond to the spectral components, and the harmonic signal in the subband indicated by the new subband location information, to obtain the down-converted signal.

**15.** A signal receiver, comprising an input device, an output device, a memory, and a processor, wherein the processor is configured to execute the method of claim 1.

**16.** A signal receiving system, comprising an antenna, a signal processing apparatus according to claim 8, and a local-frequency signal generation apparatus, wherein
the antenna is configured to receive the to-be-down-converted signal; and
the local-frequency signal generation apparatus is configured to generate harmonic signals of the preset magnitude at the centers of the subbands in which the spectral components are located, and send the harmonic signals to the signal processing apparatus.

**Patentansprüche**

**1.** Ein Signalverarbeitungsverfahren, die folgenden Schritte umfassend:

Bestimmen von Standortinformationen von Spektralkomponenten eines abwärts zu konvertierenden Signals in Teilbändern, die sich aus der Voraufteilung ergeben, wobei eine Bandbreite des Teilbandes, die sich aus der Voraufteilung ergibt, von einem Zyklus eines Lokalfrequenzsignals abhängt, das zum Frequenzmischen verwendet wird; und
Bestimmen, gemäß den Standortinformationen der Spektralkomponenten in den Teilbändern, die sich aus der Voraufteilung ergeben, einer spektralen Trägersequenz des Lokalfrequenzsignals, die dem abwärts zu konvertierenden Signal entspricht;

**gekennzeichnet durch** die folgenden Schritte:

Anweisen einer Lokalfrequenzsignalerzeugungsvorrichtung unter Verwendung der spektralen Trägersequenz des Lokalfrequenzsignals, harmonische Signale einer vorgegebenen Größe nur in den Zentren von Teilbändern zu erzeugen, in denen sich die Spektralkomponenten befinden; und
Ausführen einer Frequenzmischung für das abwärts zu konvertierende Signal und die harmonischen Signale, die den Spektralkomponenten entsprechen, um ein abwärts konvertiertes Signal zu erhalten.

2. Verfahren nach Anspruch 1, wobei während des Bestimmens von Standortinformationen von Spektralkomponenten eines abwärts zu konvertierenden Signals in Teilbändern, die sich aus der Voraufteilung ergeben, das Verfahren ferner Folgendes umfasst:

Bestimmen eines Typs eines Aliasing-Modus und einer Menge von aliasierten Signalen, die in jedem Aliasing-Modus umfasst sind, wobei der Aliasing-Modus verwendet wird, um einen Status von aliasierten Signalen zu beschreiben, die in verschiedenen Frequenzbandbereichen umfasst sind; und
Bestimmen einer Messmatrix, die zum Beschreiben eines Frequenzmisch- und Analog-Digital-Wandler-Abtastprozesses verwendet wird, gemäß einer Menge der Teilbänder, die sich aus der Voraufteilung ergibt, und der Menge der aliasierten Signale, die in jedem Aliasing-Modus umfasst sind.

3. Verfahren nach Anspruch 2, wobei das Bestimmen einer Messmatrix, die zum Beschreiben eines Frequenzmisch- und Analog-Digital-Wandler-Abtastprozesses verwendet wird, gemäß einer Menge der Teilbänder, die sich aus der Voraufteilung ergeben, und der Menge der in jedem Aliasing-Modus umfassten aliasierten Signale beinhaltet, Folgendes umfasst:

Bestimmen einer Anzahl von Spalten der Messmatrix gemäß der Anzahl der Teilbänder, die sich aus der Voraufteilung ergeben; und
Bestimmen einer Anzahl von Zeilen der Messmatrix gemäß einer Anzahl von aliasierten Signalen, die in einem Aliasing-Modus umfasst sind, der eine größtmögliche Anzahl von aliasierten Signalen umfasst.

4. Verfahren nach Anspruch 2 oder 3, wobei das Verfahren ferner Folgendes umfasst:
Bestimmen, gemäß der Menge der aliasierten Signale, die in jedem Alias-Modus und der Messmatrix umfasst sind, einer Modus-Messmatrix, die jedem Alias-Modus entspricht, wobei die Modus-Messmatrix eine Submatrix ist, die gemäß einer Spalte der Messmatrix gebildet ist, die der Standortsinformation eines Teilbandes entspricht, in dem sich eine spektrale Komponente befindet, die einem modus-aliasierten Signal entspricht, wobei das modus-aliasierte Signal ein aliasiertes Signal ist, das in dem aliasierten Modus umfasst ist.

5. Verfahren nach Anspruch 4, wobei nach dem Bestimmen einer Modus-Messmatrix, die jedem Aliasing-Modus entspricht, das Verfahren ferner Folgendes umfasst:

Bestimmen einer nicht-vollständigen Spaltenrangmatrix in den Modus-Messmatrizen gemäß einem anfänglichen Teilbandsatz, wobei der anfängliche Teilbandsatz ein Satz von Standortinformationen der Teilbänder ist, in denen sich die Spektralkomponenten befinden; und
Hinzufügen neuer Teilband-Standortinformationen zum anfänglichen Teilbandsatz gemäß einer voreingestellten Richtlinie, um die nicht-vollständige Spaltenrangmatrix in eine vollständige Spaltenrangmatrix zu ändern.

6. Verfahren nach Anspruch 5, wobei das Hinzufügen neuer Teilband-Standortinformationen zum anfänglichen Teilbandsatz gemäß einer voreingestellten Richtlinie, um die nicht-vollständige Spaltenrangmatrix in eine vollständige Spaltenrangmatrix zu ändern, Folgendes umfasst:

Bestimmen der neuen Teilband-Standortinformationen, die dem anfänglichen Teilbandsatz hinzugefügt wurden, gemäß der voreingestellten Richtlinie; und
Neubestimmen einer Modus-Messmatrix jedes Aliasing-Modus gemäß den neuen Teilband-Standortinformationen und den Standortinformationen der Teilbänder, in denen sich die Spektralkomponenten befinden, um die nicht-vollständige Spaltenrangmatrix in die vollständige Spaltenrangmatrix zu ändern.

7. Verfahren nach Anspruch 6, wobei:
das Bestimmen einer spektralen Trägersequenz des Lokalfrequenzsignals, die dem abwärts zu konvertierenden Signal entspricht, gemäß den Standortinformationen der Spektralkomponenten in den Teilbändern, die sich aus der

Voraufteilung ergeben, wobei die spektrale Trägersequenz des Lokalfrequenzsignals verwendet wird, um eine Lokalfrequenzsignalerzeugungsvorrichtung anzuweisen, harmonische Signale einer vorgegebenen Größe nur in den Zentren von Teilbändern zu erzeugen, in denen sich die Spektralkomponenten befinden, Folgendes umfasst:

Bestimmen der spektralen Trägersequenz des Lokalfrequenzsignals, die dem abwärts konvertierten Signal entspricht, gemäß den Standortinformationen der Spektralkomponenten in den Teilbändern, die sich aus der Vorausteilung und den neuen Teilband-Standortinformationen ergeben, wobei die spektrale Trägersequenz des Lokalfrequenzsignals verwendet wird, um die Lokalfrequenzsignalerzeugungsvorrichtung anzuweisen, harmonische Signale der vorgegebenen Größe nur in den Zentren der Teilbänder zu erzeugen, in denen sich die Spektralkomponenten befinden, und eine Mitte eines Teilbandes, das durch die neuen Teilband-Standortinformationen angezeigt wird; und

Durchführen der Frequenzmischung für das abwärts zu konvertierende Signal und die harmonischen Signale, die den Spektralkomponenten entsprechen, um ein abwärts konvertiertes Signal zu erhalten, Folgendes umfasst:

Durchführen einer Frequenzmischung für das abwärts zu konvertierende Signal, die harmonischen Signale, die den Spektralkomponenten entsprechen, und das harmonische Signal in dem Teilband, das durch die neuen Teilband-Standortinformationen angezeigt wird, um das abwärts zu konvertierende Signal zu erhalten.

8. Eine Signalverarbeitungsvorrichtung (20), Folgendes umfassend:

eine erste Bestimmungseinheit (201), die konfiguriert ist, um Standortinformationen von Spektralkomponenten eines abwärts zu konvertierenden Signals in Teilbändern zu bestimmen, die sich aus der Vorausteilung ergeben, wobei eine Bandbreite des Teilbandes, die sich aus der Vorausteilung ergibt, von einem Zyklus eines Lokalfrequenzsignals abhängt, das zum Mischen der Frequenz verwendet wird;

eine zweite Bestimmungseinheit (202), die konfiguriert ist, um gemäß den Standortinformationen der Spektralkomponenten in den Teilbändern, die sich aus der durch die erste Bestimmungseinheit bestimmten Vorausteilung ergeben, eine spektrale Trägersequenz des Lokalfrequenzsignals zu bestimmen, die dem abwärts zu konvertierende Signal entspricht; und

eine Frequenzmischeinheit;

die **dadurch gekennzeichnet ist, dass**:

die Signalverarbeitungsvorrichtung konfiguriert ist, um unter Verwendung der spektralen Trägersequenz des Lokalfrequenzsignals eine Lokalfrequenzsignalerzeugungsvorrichtung anzuweisen, harmonische Signale einer vorgegebenen Größe nur in Zentren von Teilbändern zu erzeugen, in denen sich die Spektralkomponenten befinden; und

die Frequenzmischeinheit (203) konfiguriert ist, um eine Frequenzmischung für das abwärts zu konvertierende Signal und die harmonischen Signale, die den Spektralkomponenten entsprechen und die durch die zweite Bestimmungseinheit ermittelt werden, ausführt, um ein abwärts zu konvertierendes Signal zu erhalten.

9. Vorrichtung nach Anspruch 8, ferner Folgendes umfassend:

eine dritte Bestimmungseinheit (204), die konfiguriert ist, um, wenn die erste Bestimmungseinheit die Standortinformation der Spektralkomponenten des abwärts zu konvertierenden Signals in den Teilbändern bestimmt, die sich aus der Vorausteilung ergeben, einen Typ eines Aliasing-Modus und eine Menge von aliasierten Signalen zu bestimmen, die in jedem Aliasing-Modus umfasst sind, wobei der Aliasing-Modus verwendet wird, um einen Status von aliasierten Signalen zu beschreiben, die in verschiedenen Frequenzbandbereichen umfasst sind; und

eine vierte Bestimmungseinheit (205), die konfiguriert ist, um eine Messmatrix zu bestimmen, die zum Beschreiben eines Frequenzmisch- und Analog-Digital-Wandler-Abtastprozesses verwendet wird, gemäß einer Menge der Teilbänder, die sich aus der Vorausteilung ergeben, und der Menge der in jedem Aliasing-Modus umfassten aliasierten Signale, die durch die dritte Bestimmungseinheit ermittelt wird.

10. Vorrichtung nach Anspruch 9, wobei:

die vierte Bestimmungseinheit konfiguriert ist, um eine Anzahl von Spalten der Messmatrix gemäß der Anzahl der Teilbänder zu bestimmen, die sich aus der Vorausteilung ergeben, und um eine Anzahl von Zeilen der Messmatrix gemäß einer Anzahl von aliasierten Signalen zu bestimmen, die in einem Aliasing-Modus umfasst sind, der eine größte Anzahl von aliasierten Signalen umfasst.

**11.** Vorrichtung nach Anspruch 9 oder 10, ferner Folgendes umfassend:
eine fünfte Bestimmungseinheit (206), die konfiguriert ist, um gemäß der Menge der aliasierten Signale, die in jedem Aliasing-Modus umfasst sind, der durch die dritte Bestimmungseinheit ermittelt wird, und der Messmatrix, die durch die vierte Bestimmungseinheit ermittelt wird, eine Modus-Messmatrix zu bestimmen, die jedem Aliasing-Modus entspricht, wobei die Modus-Messmatrix eine Submatrix ist, die gemäß einer Spalte der Messmatrix gebildet wird, die Standortinformationen eines Teilbandes entspricht, in dem sich eine Spektralkomponente befindet, die einem modus-aliasierten Signal entspricht, wobei das modus-aliasierte Signal ein aliasiertes Signal ist, das in dem Aliasing-Modus umfasst ist.

**12.** Vorrichtung nach Anspruch 11, ferner Folgendes umfassend:

eine sechste Bestimmungseinheit (207), die konfiguriert ist, um gemäß einem anfänglichen Teilbandsatz eine nicht-vollständige Spaltenrangmatrix in den Modus-Messmatrizen zu bestimmen, die durch die fünfte Bestimmungseinheit ermittelt werden, wobei der anfängliche Teilbandsatz ein Satz von Standortinformationen der Teilbänder ist, in denen sich die Spektralkomponenten befinden; und
eine Justiereinheit (208), die konfiguriert ist, um dem anfänglichen Teilbandsatz gemäß einer voreingestellten Richtlinie neue Teilband-Standortinformationen hinzuzufügen, um die durch die sechste Bestimmungseinheit ermittelte nicht-vollständige Spaltenrangmatrix in eine vollständige Spaltenrangmatrix zu ändern.

**13.** Vorrichtung nach Anspruch 12, wobei:
die Justiereinheit konfiguriert ist, um gemäß der voreingestellten Richtlinie die neuen Teilband-Standortinformationen, die dem anfänglichen Teilbandsatz hinzugefügt wurden, zu bestimmen und eine Modus-Messmatrix jedes Aliasing-Modus gemäß den neuen Teilband-Standortinformationen und den Standortinformationen der Teilbänder, in denen sich die Spektralkomponenten befinden, neu zu bestimmen, um die nicht-vollständige Spaltenrangmatrix in die vollständige Spaltenrangmatrix zu ändern.

**14.** Vorrichtung nach Anspruch 13, wobei:

die zweite Bestimmungseinheit konfiguriert ist, um gemäß den Standortinformationen der Spektralkomponenten in den Teilbändern, die sich aus der Voraufteilung und den neuen Teilband-Standortinformationen ergeben, die spektrale Trägersequenz des Lokalfrequenzsignals zu bestimmen, die dem abwärts zu konvertierenden Signal entspricht, wobei die spektrale Trägersequenz des Lokalfrequenzsignals verwendet wird, um die Lokalfrequenzsignalerzeugungsvorrichtung anzuweisen, harmonische Signale der vorgegebenen Größe nur in den Zentren der Teilbänder zu erzeugen, in denen sich die Spektralkomponenten befinden, und eine Mitte eines Teilbandes, das durch die neuen Teilband-Standortinformationen angezeigt wird; und
die Frequenzmischeinheit konfiguriert ist, um eine Frequenzmischung für das abwärts zu konvertierende Signal, die harmonischen Signale, die den Spektralkomponenten entsprechen, und das harmonische Signal in dem Teilband auszuführen, das durch die neuen Teilband-Standortinformationen angezeigt wird, um das abwärts zu konvertierende Signal zu erhalten.

**15.** Signalempfänger, umfassend eine Eingabevorrichtung, eine Ausgabevorrichtung, einen Speicher und einen Prozessor, wobei der Prozessor konfiguriert ist, um das Verfahren nach Anspruch 1 auszuführen.

**16.** Signalempfangssystem, umfassend eine Antenne, eine Signalverarbeitungsvorrichtung nach Anspruch 8 und eine lokale Frequenzsignalerzeugungsvorrichtung, wobei die Antenne konfiguriert ist, um das abwärts zu konvertierende Signal zu empfangen; und
die lokale Frequenzsignalerzeugungsvorrichtung konfiguriert ist, um harmonische Signale der vorgegebenen Größe in den Zentren der Teilbänder, in denen sich die Spektralkomponenten befinden, zu erzeugen und die harmonischen Signale an die Signalverarbeitungsvorrichtung zu senden.

**Revendications**

**1.** Procédé de traitement de signal, comprenant les étapes consistant à :

déterminer des informations de localisation de composantes spectrales d'un signal à convertir vers le bas dans des sous-bandes résultant d'une prédivision, une bande passante de la sous-bande résultant d'une prédivision dépendant d'un cycle d'un signal à fréquence locale utilisé pour le mélange de fréquences ; et

déterminer, selon les informations de localisation des composantes spectrales dans les sous-bandes résultant de la prédivision, une séquence de support spectral du signal à fréquence locale qui correspond au signal à convertir vers le bas ;
**caractérisé par** les étapes consistant à :

amener, à l'aide de la séquence de support spectral du signal à fréquence locale, un appareil de production de signal à fréquence locale à générer des signaux harmoniques d'une amplitude prédéfinie uniquement au niveau de centres de sous-bandes dans lesquelles se trouvent les composantes spectrales ; et effectuer un mélange de fréquences pour le signal à convertir vers le bas et pour les signaux harmoniques qui correspondent aux composantes spectrales, afin d'obtenir un signal converti vers le bas.

2. Procédé selon la revendication 1, tel que lors de la détermination des informations de localisation de composantes spectrales d'un signal à convertir vers le bas dans des sous-bandes résultant d'une prédivision, le procédé comprend en outre :

la détermination d'un type de mode de repliement et d'une quantité de signaux de repliement appartenant à chaque mode de repliement, le mode de repliement servant à décrire un statut de signaux de repliement appartenant à différentes gammes de bande de fréquence ; et
la détermination d'une matrice de mesure servant à décrire un mélange de fréquences et un processus d'échantillonnage de conversion analogique-numérique, selon une quantité des sous-bandes résultant d'une prédivision et de la quantité de signaux de repliement appartenant à chaque mode de repliement.

3. Procédé selon la revendication 2, dans lequel la détermination d'une matrice de mesure servant à décrire un mélange de fréquences et un processus d'échantillonnage de conversion analogique-numérique, selon une quantité des sous-bandes résultant d'une prédivision et la quantité de signaux de repliement appartenant à chaque mode de repliement, comprend :

la détermination d'une quantité de colonnes de la matrice de mesure selon la quantité des sous-bandes résultant d'une prédivision ; et
la détermination d'une quantité de lignes de la matrice de mesure, selon une quantité de signaux de repliement appartenant au mode de repliement qui comprend une plus grande quantité de signaux de repliement.

4. Procédé selon la revendication 2 ou 3, dans lequel le procédé comprend en outre :
la détermination, selon la quantité de signaux de repliement appartenant à chaque mode de repliement et la matrice de mesure, d'une matrice de mesure de mode qui correspond à chaque de repliement, la matrice de mesure de mode étant une sous-matrice formée selon une colonne de la matrice de mesure, qui correspond aux informations de localisation d'une sous-bande dans laquelle se trouve une composante spectrale correspondant à un signal en mode de repliement, le signal en mode de repliement étant un signal de repliement faisant partie du mode de repliement.

5. Procédé selon la revendication 4, dans lequel après la détermination d'une matrice de mesure de mode qui correspond à chaque mode de repliement, le procédé comprend en outre :

la détermination d'une matrice à rangées de colonnes non complètes dans les matrices de mesure de mode selon un ensemble initial de sous-bandes, l'ensemble initial de sous-bandes étant un ensemble d'informations de localisation des sous-bandes dans lesquelles se trouvent les composantes spectrales ; et
l'ajout de nouvelles informations de localisation des sous-bandes à l'ensemble initial de sous-bandes selon une politique prédéfinie, afin de transformer la matrice à rangées de colonnes non complètes en une matrice à rangées de colonnes complètes.

6. Procédé selon la revendication 5, dans lequel l'ajout de nouvelles informations de localisation de sous-bandes à l'ensemble initial de sous-bandes selon une politique prédéfinie, afin de transformer la matrice à rangées de colonnes non complètes en une matrice à rangées de colonnes complètes, comprend :

la détermination, selon la politique prédéfinie, des nouvelles informations de localisation de sous-bandes ajoutées à l'ensemble initial de sous-bandes ; et
la redétermination d'une matrice de mesure de mode de chaque mode de repliement selon les nouvelles informations de localisation de sous-bandes et les informations de localisation des sous-bandes dans lesquelles se trouvent les composantes spectrales, afin de transformer la matrice à rangées de colonnes non complètes en une matrice à rangées de colonnes complètes.

**7.** Procédé selon la revendication 6, dans lequel :

la détermination, selon les informations de localisation des composantes spectrales dans les sous-bandes résultant d'une prédivision, d'une séquence de support spectral du signal à fréquence locale qui correspond au signal à convertir vers le bas, la séquence de support spectral du signal à fréquence locale servant à amener un appareil de production de signal à fréquence locale à générer des signaux harmoniques d'une amplitude prédéfinie uniquement au niveau de centres de sous-bandes dans lesquelles se trouvent les composantes spectrales, comprend :

la détermination, selon les des informations de localisation des composantes spectrales dans les sous-bandes résultant d'une prédivision et les nouvelles informations de localisation de sous-bandes, de la séquence de support spectral du signal à fréquence locale qui correspond au signal à convertir vers le bas, la séquence de support spectral du signal à fréquence locale servant à amener l'appareil de production de signal à fréquence locale à générer des signaux harmoniques de l'amplitude prédéfinie uniquement aux centres des sous-bandes dans lesquelles se trouvent les composantes spectrales et au centre d'une sous-bande indiquée par les nouvelles informations de localisation de sous-bandes ; et
la réalisation du mélange de fréquences pour le signal à convertir vers le bas et pour les signaux harmoniques qui correspondent aux composantes spectrales, afin d'obtenir un signal converti vers le bas, comprend :
la réalisation du mélange de fréquences pour le signal à convertir vers le bas, pour les signaux harmoniques qui correspondent aux composantes spectrales et pour le signal harmonique dans la sous-bande indiquée par les nouvelles informations de localisation de sous-bandes, afin d'obtenir le signal converti vers le bas.

**8.** Appareil de traitement de signal (20), comprenant :

une première unité de détermination (201), configurée pour déterminer les informations de localisation de composantes spectrales d'un signal à convertir vers le bas dans des sous-bandes résultant d'une prédivision, une bande passante de la sous-bande résultant d'une prédivision dépendant d'un cycle d'un signal à fréquence locale servant au mélange de fréquences ;
une deuxième unité de détermination (202), configurée pour déterminer, selon les informations de localisation des composantes spectrales dans les sous-bandes résultant d'une prédivision déterminée par la première unité de détermination, une séquence de support spectral du signal à fréquence locale qui correspond au signal à convertir vers le bas ; et
une unité de mélange de fréquences ;
**caractérisé en ce que** :

l'appareil de traitement de signal est configuré pour amener, à l'aide de la séquence de support spectral du signal à fréquence locale, un appareil de production de signal à fréquence locale à générer des signaux harmoniques d'une amplitude prédéfinie uniquement au niveau de centres de sous-bandes dans lesquelles se trouvent les composantes spectrales ; et
l'unité de mélange de fréquences (203) est configurée pour effectuer le mélange de fréquences pour le signal à convertir vers le bas et pour les signaux harmoniques qui correspondent aux composantes spectrales, et qui sont déterminées par la deuxième unité de détermination, afin d'obtenir un signal converti vers le bas.

**9.** Appareil selon la revendication 8, comprenant en outre :

une troisième unité de détermination (204), configurée pour, quand la première unité de détermination détermine les informations de localisation des composantes spectrales du signal à convertir vers le bas dans les sous-bandes résultant d'une prédivision, déterminer un type de mode de repliement et une quantité de signaux de repliement appartenant à chaque mode de repliement, le mode de repliement servant à décrire un statut de signaux de repliement appartenant à différentes gammes de bandes de fréquence ; et
une quatrième unité de détermination (205), configurée pour déterminer une matrice de mesure servant à décrire un mélange de fréquences et un processus d'échantillonnage de conversion analogique-numérique, selon une quantité des sous-bandes résultant d'une prédivision et la quantité de signaux de repliement appartenant à chaque mode de repliement déterminé par la troisième unité de détermination.

**10.** Appareil selon la revendication 9, dans lequel :

la quatrième unité de détermination est configurée pour déterminer une quantité de colonnes de la matrice de mesure selon la quantité des sous-bandes résultant d'une prédivision et pour déterminer une quantité de lignes de la matrice de mesure selon une quantité de signaux de repliement appartenant au mode de repliement qui comprend une plus grande quantité de signaux de repliement.

11. Appareil selon la revendication 9 ou 10, comprenant en outre :
une cinquième unité de détermination (206), configurée pour déterminer, selon la quantité de signaux de repliement appartenant à chaque mode de repliement déterminé par la troisième unité de détermination et la matrice de mesure déterminée par la quatrième unité de détermination, une matrice de mesure de mode qui correspond à chaque mode de repliement, la matrice de mesure de mode étant une sous-matrice formée selon une colonne de la matrice de mesure qui correspond à des informations de localisation d'une sous-bande dans laquelle se trouve une composante spectrale correspondant à un signal en mode de repliement, le signal en mode de repliement étant un signal de repliement faisant partie du mode de repliement.

12. Appareil selon la revendication 11, comprenant en outre :

une sixième unité de détermination (207), configurée pour déterminer, selon un ensemble initial de sous-bandes, une matrice à rangées de colonnes non complètes dans les matrices de mesure de mode déterminées par la cinquième unité de détermination, l'ensemble initial de sous-bandes étant un ensemble d'informations de localisation des sous-bandes dans lesquelles se trouvent les composantes spectrales ; et
une unité de réglage (208), configurée pour ajouter de nouvelles informations de localisation de sous-bandes à l'ensemble initial de sous-bandes selon une politique prédéfinie, afin de transformer la matrice à rangées de colonnes non complètes déterminée par la sixième unité de détermination en une matrice à rangées de colonnes complètes.

13. Appareil selon la revendication 12, dans lequel :
l'unité de réglage est configurée pour déterminer, selon la politique prédéfinie, les nouvelles informations de localisation de sous-bandes ajoutées à l'ensemble initial de sous-bandes, et pour redéterminer une matrice de mesure de mode de chaque mode de repliement selon les nouvelles informations de localisation de sous-bandes et les informations de localisation des sous-bandes dans lesquelles se trouvent les composantes spectrales, afin de transformer la matrice à rangées de colonnes non complètes en une matrice à rangées de colonnes complètes.

14. Appareil selon la revendication 13, dans lequel :

la deuxième unité de détermination est configurée pour déterminer, selon les informations de localisation des composantes spectrales dans les sous-bandes résultant d'une prédivision et les nouvelles informations de localisation de sous-bandes, la séquence de support spectral du signal à fréquence locale qui correspond au signal à convertir vers le bas, la séquence de support spectral du signal à fréquence locale servant à amener l'appareil de production de signal à fréquence locale à générer des signaux harmoniques de l'amplitude prédéfinie uniquement aux centres des sous-bandes dans lesquelles se trouvent les composantes spectrales et au centre d'une sous-bande indiquée par les nouvelles informations de localisation de sous-bandes ; et
l'unité de mélange de fréquences est configurée pour effectuer le mélange de fréquences pour le signal à convertir vers le bas, pour les signaux harmoniques qui correspondent aux composantes spectrales et pour le signal harmonique dans la sous-bande indiquée par les nouvelles informations de localisation de sous-bandes, afin d'obtenir le signal converti vers le bas.

15. Récepteur de signaux comprenant un dispositif d'entrée, un dispositif de sortie, une mémoire et un processeur, le processeur étant configuré pour exécuter le procédé selon la revendication 1.

16. Système de réception de signaux comprenant une antenne, un appareil de traitement de signal selon la revendication 8 et un appareil de production de signal à fréquence locale, l'antenne étant configurée pour recevoir le signal à convertir vers le bas ; et
l'appareil de production de signal à fréquence locale est configuré pour générer des signaux harmoniques de l'amplitude prédéfinie aux centres des sous-bandes dans lesquelles se trouvent les composantes spectrales, et pour envoyer les signaux harmoniques à l'appareil de traitement de signal.

Determine location information of spectral components of a to-be-down-converted signal in subbands resulting from pre-division, where a bandwidth of the subband resulting from pre-division depends on a cycle of a local-frequency signal used for frequency mixing — 101

Determine, according to the location information of the spectral components in the subbands resulting from pre-division, a spectral support sequence of the local-frequency signal that corresponds to the to-be-down-converted signal, where the spectral support sequence of the local-frequency signal is used to instruct a local-frequency signal generating apparatus to generate harmonic signals of a preset magnitude only at centers of subbands in which the spectral components are located — 102

Perform frequency mixing for the to-be-down-converted signal and the harmonic signals that correspond to the spectral components, to obtain a down-converted signal — 103

FIG. 1

$f_{11}$ $f_{12}$ $f_{21}$ $f_{22}$ $f_{31}$ $f_{32}$ $f_{41}$ $f_{42}$

FIG. 2

FIG. 3

FIG. 4

FIG. 5

Signal processing apparatus

20

201

First
determining
unit

202

Second
determining
unit

203

Frequency
mixing unit

FIG. 6

20

Signal processing apparatus

201
First
determining
unit

202
Second
determining
unit

203
Frequency
mixing unit

204
Third
determining
unit

205
Fourth
determining
unit

FIG. 7

20

Signal processing apparatus

201
First
determining
unit

202
Second
determining
unit

203
Frequency
mixing unit

204
Third
determining
unit

205
Fourth
determining
unit

206
Fifth
determining
unit

FIG. 8

┌─ 20

```
Signal processing apparatus
```

┌─ 201             ┌─ 202            ┌─ 203

| First determining unit | Second determining unit | Frequency mixing unit |

┌─ 204             ┌─ 205

| Third determining unit | Fourth determining unit |

┌─ 206            ┌─ 207            ┌─ 208

| Fifth determining unit | Sixth determining unit | Adjusting unit |

FIG. 9

─ 200

| Input device 210 | Output device 220 | Processor 230 |

250

| Memory 240 |

FIG. 10

10 | 20 | 30

| Antenna | Signal processing apparatus | Local-frequency signal generation apparatus |

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2141819 A

- WO 2013152022 A